# EUROPEAN PATENT APPLICATION

(11) **EP 4 328 332 A1**
(43) Date of publication of application: **28.02.2024**
(21) Application number: 22810579.7
(22) Date of filing: 25.05.2022
(51) Int. Cl.: C21D 8/06, C22C 38/32

(54) **STEEL FOR BOLTS, AND MANUFACTURING METHOD THEREFOR**

(30) Priority: 28.05.2021 CN 202110589959
(71) Applicant: BAOSHAN IRON & STEEL CO., LTD., Shanghai 201900 (CN)
(72) Inventor: YAO, Zan, Shanghai 201900 (CN); YU, Ziquan, Shanghai 201900 (CN); JIN, Feng, Shanghai 201900 (CN); ZHAO, Sixin, Shanghai 201900 (CN); ZHAO, Haoyang, Shanghai 201900 (CN)
(74) Representative: Maiwald GmbH
(86) International application number: PCT/CN2022/094924
(87) International publication number: WO 2022/247855

(57) **Abstract**

The present invention discloses a steel for bolts, which comprises the following chemical elements in percentage by mass in addition to Fe and inevitable impurities: C: 0.37 to 0.45%; Si: 0.01 to 0.08%; Mn: 0.45 to 0.80%; Cr: 0.90 to 1.30%; Mo: 0.20 to 0.45%; Ni: 0.10 to 0.30%; V: 0.15 to 0.30%; and Al: 0.015 to 0.035%. The present invention further discloses a method for manufacturing the steel for bolts, which comprises the following steps: (1) smelting; (2) casting; (3) rough rolling; (4) high-speed wire rolling; (5) Stelmor controlled cooling; and (6) heat treatment., wherein the holding temperature of spheroidizing heat treatment is 760 to 790°C and the holding time is 4 to 12 h, followed by a slow cooling process after the holding with a cooling speed of lower than 40°C/h. The drawing area reduction rate of a coil rod is controlled to 5 to 30%. The heating temperature of quenching and tempering heat treatment is 850 to 950°C. The tempering temperature is 500 to 600°C. The steel for bolts disclosed in the present invention has a uniform structure and performance, has low production costs, and has high strength and good delayed fracture resistance.

## Description

### TECHNICAL FIELD

The present invention relates to a metal material and a manufacturing method therefor, in particular to a steel grade and a manufacturing method therefor.

### BACKGROUND

A fastener, known as "the rice of industry", is a general term for a type of mechanical parts used when two or more parts (or components) are fastened and connected into a whole, and is a mechanical basic component the most widely and numerously used in various departments of the national economy. Bolt fastener connection has the advantages of simplicity, convenience, multiple disassembly and reassembly, high standardization and low cost. A considerable number of various fasteners are used in various mechanical equipment, vehicles and ships, aircraft and satellites, railway and bridges, building structures, tools and instruments, appliances and apparatus, daily necessities, etc.

At present, fasteners are mainly used in the automotive industry, the electronic industry, and the construction and maintenance industry., Fasteners in the automotive industry are the most widely used among them, and commonly used materials for automotive fasteners include titanium alloys, steel, copper, aluminum, nylon and other metals, non-metals, etc. Steel for the automotive fasteners can be classified into the following four categories according to product characteristics: (1) non-heat treated steel: mainly including a low-carbon steel series, wherein a grade of a processed finished product is 3.6-5.8; (2) quenched and tempered steel: mainly including medium-carbon steel, low-alloy steel, and alloy steel series; (3) surface hardened steel: represented by ML18Mn, ML22Mn, and ML20Cr, wherein the main processed finished products are self-tapping screws, self-tapping self-drilling screws and other products requiring surface carburization; and (4) non-quenched and tempered steel: also known as alloy non-quenched and tempered steel, wherein the non-quenched and tempered steel for fasteners is mainly cold-work hardened steel and its steel grade No. is often preceded by a letter "LF".

Currently, there are four performance grades of automotive high-strength fasteners widely used in the market, which are 8.8, 9.8, 10.9 and 12.9, respectively. High-strength bolts of 8.8 grades or above are mostly made of carbon steel or medium-carbon alloy steel because they are required to withstand a large load and their stress state is very complex, and need to be quenched and tempered to ensure a sufficient strength and yield-to-tensile ratio of the product.

In automotive engines, commonly used high-strength fasteners may usually include several categories: cylinder head bolts, connecting rod bolts, flywheel bolts, bearing cap bolts, pulley bolts, and the like, which are also the most demanding products of automotive fasteners. In automobile running process, as the engine operates at a high speed, the engine fastening bolts are subjected to tensile cyclic stress and is prone to fatigue fracture failure. The engine fastening bolts belong to high-strength fasteners of 8.8 grades or more. In recent years, the strength of the bolts has been continuously improved with the development of compact and miniaturized engines. Such high-strength bolts are prone to hydrogen embrittlement delayed fracture. Once the engine fastening bolts have a problem, the normal operation of the automotive engines will be affected, which causes a huge damage. It can be seen that the problem of uniformity of fastening bolts such as engine cylinder head bolts will greatly affect the reliability and fuel efficiency of the engine.

Therefore, in order to ensure the reliability and fuel efficiency of the automotive engines, it has always been a focus of engine bolt research to enhance the resistance to hydrogen embrittlement delayed fracture, and improve the material uniformity of high-strength bolts such as automobile engine bolts, thereby ensuring the consistency of the performance of the bolts.

For example: Chinese patent document publication No. CN111621714A, published on September 4, 2020, and entitled "Round Steel With Excellent Corrosion Resistance and Delayed Fracture Resistance for Bolts and Production Method Thereof", discloses a round steel with excellent corrosion resistance and delayed fracture resistance for bolts, with a carbon content of 0.55-0.60%, a large amount of added Si to 1.80-2.00%, while 0.20-0.35% of Cu element are also added. With this technical solution, it is difficult to control decarburization and cracking during hot rolling and heat treatment of the alloy, and the performance of the processed bolts is poor.

For another example: Chinese patent document publication No. CN108754303A, published on November 6, 2018, and entitled "High-Strength Bolt Steel With Excellent Atmospheric Corrosion Resistance and Delayed Fracture Resistance", discloses a high-strength bolt steel with excellent atmospheric corrosion resistance and delayed fracture resistance, which requires not only the addition of 0.30-1.20% of Ni and 0.20-0.60% of Cu, but also the addition of 0.005-0.030% of Re rare earth element, resulting in high alloy costs and great smelting control difficulty.

Yet for another example, Chinese patent document publication No. CN110791715A, published on February 14, 2020, and entitled " 14.9-grade high strength steel for bolts containing niobium and titanium having atmospheric corrosion resistance and production method thereof", discloses a 14.9-grade high strength steel for bolts containing niobium and titanium having atmospheric corrosion resistance, which requires addition of 0.80-1.00% Mo and large amounts of V, Nb, Ti, Cr, and Cu. Such alloy in this solution is difficult to produce and has high costs, and the performance stability of the processed bolts cannot be guaranteed.

It can be seen that many solutions in the prior art still have many defects, and in recent years, with the increasing requirements of laws and regulations for energy saving and emission reduction effects of vehicles, the market and customers have also put forward higher requirements for automobiles, which require automobiles to improve the efficiency of the engines while meeting lightweight requirements. Therefore, in order to ensure that automobile engines have good reliability and fuel efficiency while meeting the requirements of light weight and miniaturization, there is an urgent need for a homogeneous high-strength durable bolt with high strength and excellent material uniformity and delayed fracture resistance.

On this basis, in order to solve the above problems, the present invention expects to obtain a steel for bolts and a manufacturing method therefor, wherein the steel for bolts has a uniform structure and performance, good performance consistency and stability, low production costs, high strength and good delayed fracture resistance. The steel for bolts can be used to manufacture a homogeneous high-strength durable bolt, and the manufactured homogeneous high-strength durable bolt is beneficial for improving the stability of a tightening force of the engines, thereby realizing miniaturization and high combustion efficiency of the engines, achieving the purpose of energy saving and emission reduction, which has excellent economic and social benefits.

### SUMMARY

One of the objects of the present invention is to provide a steel for bolts. The steel for bolts has a uniform structure and performance, and good delayed fracture resistance. The steel for bolts can be used to manufacture a homogeneous high-strength durable bolt which can be effectively applied to application scenarios with high requirements on the tightening force, such as automobile engines, high-end precision instrument, and the like, which significantly improve the efficiency of the engines and the machining precision of the instrument, and thus has broad market application prospects and very good economic and social benefits.

In order to achieve the above object, the present invention provides a steel for bolts comprising the following chemical elements in percentage by mass in addition to Fe and inevitable impurities:
C: 0.37-0.45% C;
Si: 0.01-0.08% Si;
Mn: 0.45-0.80% Mn;
Cr: 0.90-1.30% Cr;
Mo:0.20-0.45% Mo;
Ni:0.10-0.30% Ni;
V: 0.15-0.30% V; and
Al: 0.015-0.035%.

Preferably, the steel for bolts according to the present invention consists of the following chemical elements in percentage by mass:
C: 0.37-0.45% C;
Si: 0.01-0.08% Si;
Mn: 0.45-0.80% Mn;
Cr: 0.90-1.30% Cr;
Mo:0.20-0.45% Mo;
Ni:0.10-0.30% Ni;
V: 0.15-0.30% V;
Al: 0.015-0.035%, andthe balance of Fe and inevitable impurities.

In the steel for bolts according to the present invention, the design principle of each chemical element is specifically described as follows:
C: In the steel for bolts according to the present invention, C element is a chemical component necessary to ensure high strength of the steel for bolts, and the content of C element determines the number of carbides precipitated in coil rods and finished bolts after quenching and tempering heat treatment, which greatly affects the hardness and strength of the alloy. Therefore, in order to ensure the quality of the steel, the content of C element in the steel of the present invention needs to be controlled to be 0.37% or above. However, it should be noted that the content of C element in the steel should not be too high. A design of a too high carbon content will result in excessive precipitation and size increase of carbides in the material, which decreases plasticity and toughness of the material and result in deterioration of delayed fracture resistance. Therefore, it is necessary to control the content of C element to be 0.45% or less. On this basis, in the steel for bolts according to the present invention, the content of C element by mass is controlled to be 0.37-0.45%.
Si: In the steel for bolts according to the present invention, Si element is often added to the steel as a deoxidizer during smelting, while Si element solid-dissolved in the ferrite phase will significantly improve the strength of the steel. However, it should be noted that the content of Si element in the steel should not be too high, and when the content of the Si element in the steel is too high, the cold heading forming performance of the material will be reduced, which further deteriorates the delayed fracture resistance of the material. Therefore, in order to ensure the quality of the steel, the content of the Si element in the steel of the present invention needs to be controlled to be 0.08% or below. At the same time, in order to reduce the melting point of inclusions in the steel and remove large-grain non-deformable inclusions, it is necessary to control the content of the Si element to be 0.01% or above. On this basis, in the steel for bolts according to the present invention, the content of Si element by mass is controlled to be 0.01-0.08%.
Mn: In the steel for bolts according to the present invention, Mn element is also often added to the steel as a deoxidizer during a steel making process. At the same time, Mn element is easily bonded to detrimental element S in the steel to form MnS, so that the harm of element S can be reduced. In addition, Mn is also a commonly used strengthening element in the steel and mainly plays a role in solid-solution strengthening, so that the formed alloy cementite has a higher strength, and therefore it is necessary to control the content of Mn element in the alloy to be 0.45% or more. However, it should be noted that the content of Mn element should not be too high. When the Mn content in the steel is too high, the tendency of grain coarsening during heating of the material will be increased, and the difficulty of controlling a controlled cooling structure is increased. Mn element tends to promote the segregation of residual elements. Therefore, it is necessary to control the content of the Mn element in the steel to be 0.80% or less. On this basis, in the steel for bolts according to the present invention, the content of Mn element by mass is controlled to be 0.45-0.80%.
Cr: In the steel for bolts according to the present invention, the addition of Cr element is beneficial to improve the hardenability of the alloy, and refine the structure during the quenching and tempering process of bolts, and also improve the strength of cementite, which improves both the strength and the plasticity of the material. At the same time, Cr element is beneficial to improve the corrosion resistance of the material and reduce the hydrogen embrittlement susceptibility. Therefore, in order to ensure the quality of the steel, it is necessary to control the Cr content in the steel to be 0.90% or more. In addition, in order to prevent the occurrence of an abnormal martensite structure and reduce the difficulty in controlling the structure of the coil rod, the content of Cr element in the steel should also not be too high, and it is necessary to control the content of Cr element to be 1.30% or less. Therefore, in the steel for bolts according to the present invention, the content of Cr element by mass is controlled to be 0.90-1.30%.
Mo: In the steel for bolts according to the present invention, the addition of Mo element is beneficial for refining the structure, improving the tempering stability of the material, improving the strength and hardness of the material under high-temperature tempering, and improving the delayed fracture resistance of the material. However, it should be noted that the content of Mo element in the steel should not be too high, and when too much Mo element is added in the steel, the difficulty in the material structure control will be increased, and the cost of the alloy will be increased. Therefore, in the steel for bolts according to the present invention, the content of Mo element by mass is controlled to be 0.20-0.45%.
Ni: In the steel for bolts according to the present invention, Ni element is an austenite forming element and can be solid-dissolved in the ferrite phase, which is beneficial for improving the strength of the material. At the same time, Ni element can also effectively improve the hardenability of the material, so as to improve the uniformity of the structure and refine the structure during the quenching and tempering process of bolts. However, it should be noted that the content of Ni element in the steel should not be too high, either. A content of Ni too high will lead to the occurrence of abnormal martensite structures during the production process of the material, and will also affect the cost of the alloy. Therefore, in the steel for bolts according to the present invention, the content of Ni element by mass is controlled to be 0.10-0.30%.
V: In the steel for bolts according to the present invention, V element can easily react with C and N elements in the steel to precipitate carbonitrides. These nano-scale precipitates greatly enhance the strength and plasticity of the material. At the same time, carbonitriding of V can act as a hydrogen trap, which bonds with free hydrogen elements in the steel to reduce its harm. By controlling the number and size of carbonitrides of V in the steel, the improvement of the delayed fracture resistance of the material will be realized, while the consistency of material properties will also be improved. In order to exert the promoting effect of the V element, the content of V element in the steel is designed to be 0.15% or more, but the addition of an excessive amount of V element will cause an increase to the size of its carbonitrides, deteriorating the plasticity and toughness and formability of the material, and therefore, it is also necessary to control the content of V element in the steel to be 0.30% or less. On this basis, in the steel for bolts according to the present invention, the content of V element by mass is controlled to be 0.15-0.30%.
Al: In the steel for bolts according to the present invention, Al element is the most effective deoxidizing element in the steel making process to exert its deoxidizing effect. However, during deoxidation, Al is prone to producing Al₂O₃ particles which has sharp edges and corners, which will significantly affect the fatigue life, durability and delayed fracture resistance of finished bolts especially when the oxygen content in the steel is too high. Therefore, in order to ensure the performance of high-strength bolts and prevent the generation of large-grain brittle inclusions to improve the quality of the steel, in the steel for bolts according to the present invention, the content of Al element by mass can be controlled to be 0.015-0.035%.

Preferably, in the steel for bolts according to the present invention, the contents of impurity elements satisfy the following in percentage by mass: Cu≤0.05%; P<0.01%; S<_0.010%; O≤0.001%; and N≤0.005%.

In the above technical solution, Cu, P, S, O and N elements are all impurity elements in the steel. In order to obtain a steel with better performance and better quality, the content of impurity elements in the steel should be reduced as much as possible when technical conditions allow.

It should be noted that in the present invention, the impurity element Cu is liable to cause hot brittleness of high-strength steel, and at the same time, uneven distribution of too much Cu element in the material will increase the retained austenite content in the material and a decrease in performance stability, and therefore, in the steel for bolts according to the present invention, it is necessary to control the content of Cu element to be 0.05% or less.

Accordingly, in the present invention, too high contents of P and S elements in the steel will increase the brittleness of the steel, particularly when segregation occurs, and therefore, in the steel for bolts according to the present invention, it is necessary to control the contents of P and S elements to be P<0.01% and S≤0.010%.

In addition, in the present invention, N element also causes an increase in the material, while too high contents of N and C elements will cause an increase in the size of microalloy precipitates in the steel for bolts, reducing the delayed fracture resistance of the material, and therefore, in the steel for bolts according to the present invention, the content of N element needs to be controlled to be 0.005% or less.

In addition, in the present invention, the content of O element as an impurity element can be controlled to be 0.001% or less.

Preferably, in the steel for bolts according to the present invention, a ratio between the contents of the element Al and element O in percentage by mass satisfies the following: Al/O>20.

In the technical solution according to the present invention, in order to obtain a better implementation effect and a steel with better quality and performance, when controlling the content of a single chemical element, it is also possible to preferably control the ratio between the contents of Al element to O element to satisfy: Al/O>20. Each element in the formula is substituted with a corresponding content by mass of the element.

In the present invention, controlling Al/O>20 is beneficial for reducing the oxygen content in the steel while avoiding the generation of too many coarse single-particle inclusions, which can ensure that the produced large-particle inclusions have a size of less than 38 µm, thereby preventing a damage to the plasticity and toughness and delayed fracture resistance of the material.

Preferably, in the steel for bolts according to the present invention, the contents of the element V, element C and element N in percentage by mass satisfy the following, satisfy: V×(C+N)≤1/8.

In the technical solution according to the present invention, while controlling the content of a single chemical element, it is also possible to control the contents of V element, C element and N element to satisfy: V×(C+N)≤1/8. Each element in the formula is substituted with a numerical value before a percentage sign of a corresponding content by mass of the element.

In the present invention, preferably, it is possible to further control V×(C+N)≤1/8, thereby controlling the content of V element in the steel so that a proportion of carbonitride precipitates of V with a size of 5-50 nm in a finished bolt is higher than 90%. The presence of such nano-sized carbides advantageously increases the strength and plasticity and toughness of the material, while acting as hydrogen traps to reduce the hydrogen embrittlement tendency of the bolts.

Preferably, the steel for bolts according to the present invention has a microstructure comprising tempered sorbite.

Preferably, the microstructure of the steel for bolts according to the present invention further has carbonitride precipitates of V, wherein a number proportion of carbonitride precipitates of V having a size of 5-50 nm is higher than 90%.

Herein, the "size" in terms of the carbonitride precipitates and inclusions of V refers to a size of a single precipitate or inclusion, specifically a length of the longest line segment passing through the centers of the precipitates or inclusions, such as a diameter (when being spherical or approximately spherical) or a major axis (when being ellipsoidal or approximately ellipsoidal) or other lengths (when being of other shapes).

Preferably, inclusions in the steel for bolts according to the present invention have a size of less than 38 µm.

Preferably, the steel for bolts according to the present invention satisfies the following properties: a tensile strength≥1200 MPa, a yield-to-tensile ratio>0.9, a tensile strength loss≤10% in hydrogen charging and slow straining test, a bolt tightening and twisting fluctuation<8%, and a bolt fatigue life>75000 times. The "yield-to-tensile ratio" refers to the ratio between yield strength and tensile strength.

Herein, the mechanical properties of the steel are determined according to GB/T 228.1-2010 "Metallic Materials-Tensile Testing". The "bolt fatigue life" refers to the number of tests at the time the bolts fracture, and is determined according to GBT 13682-1992 "Axial load fatigue testing for threaded fasteners". The "tensile strength loss in hydrogen charging and slow straining test" is calculated as: (tensile strength under the air condition) - (tensile strength under the hydrogen corrosion condition) / (tensile strength under the air condition), and is determined according to GB/T 15970.7-2017 "Corrosion of metals and alloys-Stress corrosion testing Part 7: Slow strain rate testing". The "bolt tightening and twisting fluctuation" is calculated as: (torque actually loaded during bolt tightening) - (target torque) / (target torque), wherein the smaller the value, the better the uniformity of the material.

Accordingly, another object of the present invention is to provide a manufacturing method for the steel for bolts. The manufacturing method is easy to operate, and the steel for bolts manufactured by the method has a uniform structure and performance. The steel has a tensile strength of 1200 MPa or more, a yield-to-tensile ratio of more than 0.9, a tensile strength loss≤10% in hydrogen charging and slow straining test, a bolt tightening and twisting fluctuation of 8% or less, and a bolt fatigue life of more than 75000 times. The steel can be used to manufacture bolts which can be effectively applied to application scenarios with high requirements on the tightening force, such as automobile engines, high-end precision instrument, and the like, and thus has very good economic and social benefits.

In order to achieve the above object, the present invention provides a manufacturing method for a steel for bolts, comprising the steps of:
(1) smelting molten steel;
(2) casting the smelted molten steel to produce a billet;
(3) performing rough rolling on the billet;
(4) performing high-speed wire rolling to produce a coil rod;
(5) performing Stelmor controlled cooling on the coil rod; and
(6) heat treatment: including sequentially subjecting the coil rod to spheroidizing heat treatment, drawing, and quenching and tempering heat treatment, wherein the holding temperature of the spheroidizing heat treatment is 760-790°C, and the holding time is 4-12 h, the followed by a slow cooling process after the holding with a cooling speed of lower than 40°C/h; wherein a drawing area reduction rate of the coil rod is controlled to 5-30% during the drawing; wherein the heating temperature of the quenching and tempering heat treatment is 850-950°C, and a tempering temperature is 500-600°C.

Preferably, in the manufacturing method for the steel for bolts according to the present invention, other steps generally performed in the manufacturing process of a steel for bolts in the art, such as cold heading after drawing, may be further included.

By the manufacturing method for the steel for bolts according to the present invention, a coil rod of the steel for bolts having the above excellent properties according to the present invention can be efficiently manufactured.

In the technical solution of the present invention, in the smelting process of step (1), the molten steel can be smelted through an electric furnace or a converter, and then subjected to external refining. Specifically, in the external refining, a ladle furnace (LF) and a vacuum degassing (VD) or Ruhrstahll Heraeus (RH) degassing process can be employed; the composition and addition amount of a synthetic slag are adjusted during the smelting process, the content of impurity elements in the steel is controlled, and the vacuum degassing time is controlled to be more than 15 min. In the smelting process, the content of impurity elements P and S in the steel can be controlled to be lower than 0.010%, the vacuum degassing time is required to be more than 15 min, the endpoint O content is controlled to be lower than 0.0010%, the endpoint N content is controlled to be lower than 0.0050%, and the endpoint H content is controlled to be lower than 2 ppm.

Accordingly, in step (2) of the manufacturing method according to the present invention, a bloom caster can be used to cast a square bloom during the casting process, argon protection can be used during the casting process, the size of the square bloom can be controlled to be 300-450 mm, and carbon segregation at a core of the billet can be controlled to be lower than 1.10 by adjusting a drawing speed, and the cooling and soft end reduction parameters during the continuous casting process.

Herein, the "carbon segregation at the core" refers to a ratio of the carbon content of a core of a cast slab to the average carbon content of the cast slab, wherein the carbon content can be determined according to the standard GB/T 20123.

In step (3) of the manufacturing method according to the present invention, namely the rough rolling step, a continuously cast slab may be bloomed at a temperature of 1050-1250°C into a square billet of 150-250 mm by adopting a twice-heating production process. After the square billet is subjected to eddy current inspection, magnetic powder inspection, grinding wheel trimming, supplemental magnetic powder inspection and trimming, the treated square billet is heated in a heating furnace. During the billet heating process, the heating temperature can be controlled to be 960-1150°C and the holding time can be controlled to be 1.5-3.0 h.

Further, in step (4) of the manufacturing method according to the present invention, in the high-speed wire rolling process, a rolling speed can be controlled to be 8-90 m/s. Obviously, in some preferred embodiments, in order to achieve better implementation effects, the inlet temperature of a finishing rolling unit in the on-line temperature can be preferably controlled to be 850-970°C, the inlet temperature of a reducing and sizing unit can be controlled to be 800-950°C, and the laying temperature can be controlled to be 750-900°C.

In addition, in the present invention, a size specification of a coil rod obtained by rolling may be Φ6-26 mm, and the structure transformation of the coil rod may be controlled by adjusting the air volume of Stelmor wire fans to optimize the structure of the coil rod during the Stelmor controlled cooling process of the step (5) of the present invention.

Accordingly, in step (6) of the manufacturing method of the present invention, in the heat treatment step, the manufactured coil rod may be subjected to spheroidizing heat treatment, wherein the holding temperature of the spheroidizing heat treatment may be controlled to be 760-790°C, the holding time may be controlled to be 4-12 h, followed by a slow cooling process after the holding with a cooling speed of lower than 40°C/h. A drawing area reduction rate of the coil rod may be controlled to be 5-30%, the heating temperature of the quenching and tempering heat treatment may be controlled to be 850-950°C, and the tempering temperature may be controlled to be 500-600°C.

Preferably, in the manufacturing method of the present invention, in step (1), the vacuum degassing time is controlled to be more than 15 min during the smelting.

Preferably, in the manufacturing method of the present invention, in step (2), carbon segregation at a core of the billet is controlled to be lower than 1.10 during the casting.

Preferably, in the manufacturing method of the present invention, in step (3), during the billet heating process, the heating temperature is controlled to be 960-1150°C, and the holding time is controlled to be 1.5-3.0 h.

Preferably, in the manufacturing method of the present invention, in step (4), a rolling speed is controlled to be 8-90 m/s.

Preferably, in the manufacturing method of the present invention, in step (4), the inlet temperature of a finishing rolling unit is controlled to be 850-970°C, the inlet temperature of a reducing and sizing unit is controlled to be 800-950°C, and the laying temperature is controlled to be 750-900°C.

Preferably, in the manufacturing method according to the present invention, in step (5), the Stelmor controlled cooling uses at least 14 fans, wherein the air volume of fans F1-F5 is less than or equal to 80%, the air volume of fans F6-F12 is less than or equal to 50%, and the air volume of fans F13-F14 is less than or equal to 45%.

Herein, the "air volume" with a unit % refers to a proportion of the air volume of each fan, wherein the air volume of each fan is 200,000 m³/h. For example, "the air volume of the fans F1-F5 is less than or equal to 80%"refers to that a proportion of the air volume of each of the fans F1-F5 is less than or equal to 80%, i.e. the air volume of each of the fans F1-F5 is less than or equal to 160,000 m³/h; "the air volume of the fans F6-F12 is less than or equal to 50%"refers to that a proportion of the air volume of each of the fans F6-F12 is less than or equal to 50%, i.e. the air volume of each of the fans F6-F12 is less than or equal to 100,000 m³/h; and "the air volume of the fans F13-F14 is less than or equal to 45%"refers to that the air volume of each of the fans F13-F14 is less than or equal to 45%, i.e. the air volume of each of the fans F13-F14 is less than or equal to 90,000 m³/h.

In the above technical solution of the present invention, the Stelmor controlled cooling is performed by using at least 14 fans, and the coil rod of the steel for bolts obtained after the Stelmor controlled cooling can obtain good plasticity and toughness.

Compared with the prior art, the steel for bolts and the manufacturing method therefor according to the present invention have the following advantages and beneficial effects:
the steel for bolts according to the present invention has a uniform structure and performance, good performance consistency and stability, low production costs, high strength and good delayed fracture resistance. The steel for bolts can be used to manufacture a homogeneous high-strength durable bolt, and the manufactured homogeneous high-strength durable bolt can be effectively applied to application scenarios with high requirements on the tightening force, such as automobile engines, high-end precision machinery, and the like, which can significantly improve the efficiency of the engines and the machining precision of the instrument. The has broad market application prospects and very good economic and social benefits.

The steel for bolts according to the present invention has a refined tempered sorbite structure after the quenching and tempering heat treatment, and has a uniform structure and performance. In some preferred embodiments, the number proportion of the carbonitride precipitates of V having a size of 5-50 nm is higher than 90%. Inclusions have a size of less than 38 µm. The tensile strength can reach 1200 MPa or above.

The fatigue life and delayed fracture resistance of a finished high-strength bolt manufactured from the steel for bolts according to the present invention are more than doubled compared with those of conventional materials, and at the same time, the bolt tightening and twisting fluctuation is 8% or less, so that the uniformity of the tightening force of the bolt can be remarkably improved, thereby realizing miniaturization and high combustion efficiency of engines, and achieving the purpose of energy saving and emission reduction.

### DETAILED DESCRIPTION

Next, the steel for bolts and the manufacturing method therefor according to the present invention will be further explained and illustrated with reference to the specific Examples. However, this explanation and illustration do not constitute an improper limitation of the technical solution of the present invention.

### Examples 1-10 and Comparative examples 1-4

The steels for bolts in Examples 1-10 are all manufactured by the following steps:
(1) molten steel is smelted according to the chemical composition shown in Table 1-1 and Table 1-2: the molten steel is smelted through an electric furnace or a converter, and then subjected to external refining, wherein the external refining uses a ladle furnace (LF) and a vacuum degassing (VD) or Ruhrstahll Heraeus (RH) degassing process, the composition and the addition amount of a synthetic slag are adjusted during the smelting process, and the vacuum degassing time is controlled to be more than 15 min during the smelting process.
(2) The smelted molten steel is cast to produce a billet: a square bloom is cast by a bloom caster, wherein argon protection can be used during casting, the size of the square bloom can be controlled to be 300-450 mm, and carbon segregation at a core of the billet can be controlled to be lower than 1.10 by adjusting a drawing speed, and the cooling and soft end reduction parameters during the continuous casting process.
(3) The billet is subjected to rough rolling: a continuously cast slab is bloomed at a temperature of 1100-1250°C into a square billet of 150-250 mm by adopting a twice-heating production process. After the square billet is subjected to ultrasonic inspection, magnetic powder inspection, grinding wheel trimming, supplemental magnetic powder inspection and trimming, the treated square billet is heated in a heating furnace. During the billet heating process, the heating temperature is controlled to be 960-1150°C and the holding time is controlled to be 1.5-3.0 h.
(4) High-speed wire rolling is performed to produce a coil rod with a size specification of Φ6-26 mm: wherein a rolling speed is controlled to be 8-90 m/s, the inlet temperature of a finishing rolling unit is controlled to be 850-970°C, the inlet temperature of a reducing and sizing unit is controlled to be 800-950°C, and the laying temperature is controlled to be 750-900°C.
(5) Stelmor controlled cooling is performed on the coil rod: the Stelmor controlled cooling is performed on the coil rod by using 14 Stelmor line fans, wherein the air volume of fans F1-F5 is less than or equal to 80%, the air volume of fans F6-F12 is less than or equal to 50%, the air volume of fans F13-F14 is less than or equal to 45%, and the structure transformation of the coil rod is controlled by adjusting the air volume of the Stelmor line fans to optimize the structure of the coil rod.
(6) Heat treatment: including sequentially subjecting the coil rod to spheroidizing heat treatment, drawing, and quenching and tempering heat treatment, wherein the holding temperature of the spheroidizing heat treatment is controlled to be 760-790°C, the holding time is 4-12 h, followed by a slow cooling process after the holding with a cooling speed being lower than 40°C/h, a drawing area reduction rate of the coil rod is controlled to be 5-30%, the heating temperature of the quenching and tempering heat treatment is controlled to be 850-950°C, and the tempering temperature is 500-600°C.

It should be noted that coil rods in Examples 1-10 of the present invention are manufactured by using the above steps, and have chemical components and related process parameters that meet the design specification control requirements of the present invention. Comparative coil rods in Comparative examples 1-4 are also manufactured by using a process of: smelting, casting, rough rolling, high-speed wire rolling, Stelmor controlled cooling and heat treatment, but there are parameters that do not meet the design requirements of the present invention in chemical composition and related process parameters.

Table 1 lists the mass percentage of each chemical element for the steels for bolts in Examples 1-10 and the comparative steels in Comparative examples 1-4.

**Table 1-1 (wt%, the balance being Fe and other inevitable impurities besides Cu, P, S, O and N)**

| No. | Chemical elements | | | | | | | | | | | | |
|---|---|---|---|---|---|---|---|---|---|---|---|---|---|
| | C | Si | Mn | Cr | Mo | Ni | V | Al | Cu | P | S | O | N |
| Example 1 | 0.37 | 0.01 | 0.65 | 1.3 | 0.45 | 0.3 | 0.25 | 0.015 | 0.008 | 0.008 | 0.01 | 0.0004 | 0.0025 |
| Example 2 | 0.39 | 0.08 | 0.8 | 1.1 | 0.3 | 0.25 | 0.25 | 0.015 | 0.01 | 0.006 | 0.008 | 0.0007 | 0.005 |
| Example 3 | 0.39 | 0.05 | 0.45 | 1.3 | 0.25 | 0.25 | 0.25 | 0.015 | 0.02 | 0.006 | 0.008 | 0.0007 | 0.0035 |
| Example 4 | 0.39 | 0.06 | 0.55 | 1.1 | 0.25 | 0.25 | 0.25 | 0.015 | 0.02 | 0.006 | 0.008 | 0.0005 | 0.0045 |
| Example 5 | 0.4 | 0.06 | 0.55 | 0.95 | 0.25 | 0.25 | 0.25 | 0.02 | 0.02 | 0.008 | 0.008 | 0.0005 | 0.0045 |
| Example 6 | 0.4 | 0.05 | 0.55 | 1.2 | 0.28 | 0.25 | 0.3 | 0.035 | 0.04 | 0.008 | 0.008 | 0.001 | 0.0045 |
| Example 7 | 0.4 | 0.05 | 0.6 | 0.90 | 0.28 | 0.1 | 0.3 | 0.03 | 0.04 | 0.01 | 0.006 | 0.0008 | 0.0035 |
| Example 8 | 0.44 | 0.05 | 0.7 | 1.1 | 0.2 | 0.2 | 0.15 | 0.02 | 0.05 | 0.008 | 0.005 | 0.0008 | 0.0038 |
| Example 9 | 0.45 | 0.07 | 0.7 | 1.1 | 0.3 | 0.3 | 0.2 | 0.02 | 0.03 | 0.004 | 0.005 | 0.0008 | 0.005 |
| Example 10 | 0.45 | 0.05 | 0.7 | 1.1 | 0.3 | 0.3 | 0.27 | 0.02 | 0.03 | 0.004 | 0.005 | 0.0008 | 0.005 |
| Comparative example 1 | 0.4 | ***0.25*** | 0.7 | 1.1 | 0.2 | ***0*** | ***0*** | 0.035 | ***0.09*** | ***0.012*** | 0.01 | ***0.0025*** | ***0.006*** |
| Comparative example 2 | 0.43 | ***1.8*** | ***1*** | ***1.5*** | 0.4 | ***0*** | ***0.5*** | **0.02** | ***0.*2** | 0.009 | 0.008 | ***0.0015*** | 0.0045 |
| Comparative example 3 | 0.41 | 0.02 | 0.8 | 1.05 | 0.2 | ***0.05*** | ***0.1*** | ***0.005*** | 0.004 | 0.01 | ***0.015*** | 0.0008 | ***0.006*** |
| Comparative example 4 | 0.35 | ***0.2*** | 0.7 | 1 | ***0.55*** | ***0*** | 0.25 | ***0.045*** | 0 | 0.008 | 0.007 | ***0.0015*** | 0.0035 |

**Table 1-2**

| No. | Al/O | V×(C+N) |
|---|---|---|
| Example 1 | 37.5 | 0.093 |
| Example 2 | 21.4 | 0.099 |
| Example 3 | 21.4 | 0.098 |
| Example 4 | 30.0 | 0.099 |
| Example 5 | 40.0 | 0.101 |
| Example 6 | 35.0 | 0.121 |
| Example 7 | 37.5 | 0.121 |
| Example 8 | 25.0 | 0.067 |
| Example 9 | 25.0 | 0.091 |
| Example 10 | 25.0 | 0.123 |
| Comparative example 1 | ***14.0*** | 0 |
| Comparative example 2 | ***13.3*** | ***0.217*** |
| Comparative example 3 | ***6.2*** | 0.042 |
| Comparative example 4 | 30.0 | 0.088 |

Table 2-1 and Table 2-2 list the specific process parameters of the steels for bolts in Examples 1-10 and the comparative steels in Comparative examples 1-4 in the above steps.

**Table 2-1**

| No. | Step (1) | Step (2) | | Step (3) | | Step (4) | | | |
|---|---|---|---|---|---|---|---|---|---|
| | Vacuum degassing time during smelting (min) | Carbon segregation at a core of a billet during casting | Squar e bloom size (mm) | Billet heating temperat ure (°C) | Billet holding time (h) | Rolling speed (m/s) | Inlet temperature of a finishing rolling unit (°C) | Inlet temperature of a reducing and sizing unit (°C) | Laying temperat ure (°C) |
| Example 1 | 18 | 1.03 | 300 | 960 | 3.0 | 90 | 850 | 800 | 750 |
| Example 2 | 20 | 1.05 | 300 | 980 | 1.5 | 80 | 880 | 820 | 780 |
| Example 3 | 16 | 1.03 | 320 | 980 | 1.5 | 70 | 890 | 850 | 780 |
| Example 4 | 18 | 1.07 | 350 | 990 | 1.8 | 60 | 900 | 880 | 790 |
| Example 5 | 19 | 1.09 | 390 | 1000 | 1.9 | 52 | 920 | 880 | 800 |
| Example 6 | 25 | 1.05 | 400 | 1050 | 2.0 | 40 | 950 | 900 | 850 |
| Example 7 | 20 | 1.07 | 400 | 1080 | 1.8 | 30 | 950 | 920 | 870 |
| Example 8 | 16 | 1.07 | 420 | 1100 | 2.3 | 20 | 960 | 940 | 880 |
| Example 9 | 18 | 1.03 | 450 | 1120 | 2.5 | 15 | 970 | 950 | 900 |
| Example 10 | 25 | 1.03 | 450 | 1150 | 2.8 | 8 | 970 | 950 | 900 |
| Comparati ve example 1 | **10** | 1.08 | 500 | ***1200*** | 2.0 | 20 | 900 | ***750*** | 750 |
| Comparati ve example 2 | 16 | ***1.12*** | 300 | 1150 | ***3.5*** | 14 | 920 | 850 | 900 |
| Comparati ve example 3 | ***15*** | ***1.11*** | 400 | ***1200*** | ***1.0*** | 90 | ***820*** | 900 | 880 |
| Comparati ve example 4 | ***15*** | 1.09 | 550 | ***920*** | ***8.0*** | ***100*** | ***980*** | ***970*** | ***920*** |

**Table 2-2**

| No. | Step (5) | | | | | Step (6) | | | | | |
|---|---|---|---|---|---|---|---|---|---|---|---|
| | Coil rod size specific ation | Number of fans (Piece) | Air volume of fans F1-F5 (%) | Air volume of fans F6-F12 (%) | Air of volume of fans F13-F14 (%) | Holding tempera ture (°C) | Holding time (min) | Cooling speed (°C/h) | Drawing area reduction rate of a coil rod (%) | Heating treatment of quenchin g and tempering heat treatment (°C) | Temper ing tempera ture (°C) |
| Example 1 | Φ6mm | 14 | 5 | 0 | 0 | 760 | 4 | 25 | 5 | 880 | 500 |
| Example 2 | Φ7mm | 14 | 10 | 2 | 5 | 760 | 6 | 15 | 8 | 850 | 520 |
| Example 3 | Φ8mm | 14 | 15 | 4 | 8 | 765 | 8 | 35 | 10 | 850 | 540 |
| Example 4 | Φ9mm | 14 | 20 | 8 | 10 | 765 | 6 | 38 | 15 | 870 | 550 |
| Example 5 | Φ11 mm | 14 | 25 | 10 | 15 | 770 | 10 | 30 | 10 | 890 | 550 |
| Example 6 | Φ15mm | 14 | 30 | 15 | 20 | 775 | 11 | 20 | 20 | 900 | 570 |
| Example 7 | Φ18mm | 14 | 45 | 20 | 30 | 780 | 11 | 35 | 18 | 920 | 570 |
| Example 8 | Φ20 mm | 14 | 65 | 30 | 35 | 785 | 12 | 27 | 25 | 930 | 580 |
| Example 9 | Φ22mm | 14 | 70 | 40 | 40 | 790 | 12 | 35 | 28 | 940 | 586 |
| Example 10 | Φ26mm | 14 | 80 | 50 | 45 | 790 | 12 | 39 | 30 | 950 | 600 |
| Comparativ e example 1 | Φ16.0 mm | ***12*** | ***90*** | 20 | 10 | ***800*** | ***3*** | 15 | ***35*** | 880 | ***480*** |
| Comparativ e example 2 | Φ20.0 mm | ***10*** | 50 | 10 | 10 | ***720*** | 10 | ***50*** | 10 | ***980*** | 500 |
| Comparativ e example 3 | Φ8.0 mm | 14 | 39 | ***55*** | 25 | ***740*** | 5 | 30 | 5 | ***960*** | 600 |
| Comparativ e example 4 | Φ5.5 mm | ***12*** | 0 | ***60*** | ***55*** | 780 | ***13*** | ***45*** | 15 | 900 | ***490*** |

The finally manufactured steels for bolts in Examples 1-10 and comparative steels in Comparative examples 1-4 are separately sampled, and steel samples in the Examples and Comparative examples are observed and analyzed to obtain the structures of the steels in the Examples and Comparative examples. A mechanical property test is carried out on the steel samples in the Examples and Comparative examples after completion of the observation, and the results of the observation and the mechanical property test are shown in Table 3 and Table 4, respectively.

Relevant mechanical property test methods are described below:
Tensile test: a test is carried out according to GB/T 228.1-2010 "Metallic Materials-Tensile Testing" under room temperature conditions.

Table 3 lists the structure observation results of the steels for bolts in Examples 1-10 and the comparative steels in Comparative examples 1-4.

**Table 3**

| No. | Proportion of carbonitride precipitates of 5-50 nm (%) | Maximum inclusion size (µm) |
|---|---|---|
| Example 1 | 95 | 28 |
| Example 2 | 97 | 25 |
| Example 3 | 95 | 30 |
| Example 4 | 94 | 25 |
| Example 5 | 94 | 24 |
| Example 6 | 97 | 36 |
| Example 7 | 98 | 20 |
| Example 8 | 91 | 15 |
| Example 9 | 93 | 17 |
| Example 10 | 93 | 17 |
| Comparative example 1 | ***0*** | ***53*** |
| Comparative example 2 | ***78*** | 25 |
| Comparative example 3 | 90 | 23 |
| Comparative example 4 | 94 | ***42*** |

As shown in Table 3, it should be noted that in the present invention, the microstructure of the steels for bolts in Examples 1-10 includes tempered sorbite.

In addition, it should be noted that in the steels for bolts in Examples 1-10 of the present invention, the microstructure also has carbonitride precipitates of V, wherein the proportion of carbonitride precipitates of V having a size of 5-50 nm is higher than 90%.

In addition, in the steels for bolts in Examples 1-10 of the present invention, inclusions in the steel have a size of less than 38 µm.

Table 4 lists the mechanical property test results of the steels for bolts in Examples 1-10 and the comparative steels in Comparative examples 1-4.

**Table 4**

| No. | Tensile strength (MPa) | Yield-to-tensile ratio |
|---|---|---|
| Example 1 | 1230 | 0.92 |
| Example 2 | 1290 | 0.95 |
| Example 3 | 1276 | 0.93 |
| Example 4 | 1258 | 0.93 |
| Example 5 | 1300 | 0.95 |
| Example 6 | 1320 | 0.93 |
| Example 7 | 1330 | 0.94 |
| Example 8 | 1240 | 0.93 |
| Example 9 | 1298 | 0.93 |
| Example 10 | 1310 | 0.93 |
| Comparative example 1 | 1210 | 0.91 |
| Comparative example 2 | 1340 | 0.93 |
| Comparative example 3 | 1310 | 0.92 |
| Comparative example 4 | ***1150*** | ***0.90*** |

It should be noted that the sampled steels for bolts in Examples 1-10 and the sampled comparative steels in Comparative examples 1-4 are processed to obtain corresponding bolts. The resulting bolts in Examples 1-10 and Comparative examples 1-4 are tested for relevant properties, and the resulting property test results are listed in Table 5.

Table 5 lists the property test results of the bolts processed by the steels for bolts of Examples 1-10 and the comparative steels in Comparative examples 1-4.

**Table 5**

| No. | Bolt fatigue life (times) | tensile strength loss in hydrogen charging and slow straining test (%) | Bolt tightening and twisting fluctuation (%) |
|---|---|---|---|
| Example 1 | 82530 | 8 | 6 |
| Example 2 | 81679 | 9 | 5 |
| Example 3 | 79435 | 8 | 4 |
| Example 4 | 81092 | 7 | 4 |
| Example 5 | 85438 | 7 | 5 |
| Example 6 | 79981 | 8 | 3 |
| Example 7 | 83342 | 9 | 2 |
| Example 8 | 81509 | 9 | 3 |
| Example 9 | 79876 | 7 | 5 |
| Example 10 | 82981 | 5 | 4 |
| Comparative example 1 | ***34198*** | ***22*** | ***18*** |
| Comparative example 2 | ***40165*** | ***21*** | ***20*** |
| Comparative example 3 | ***29346*** | ***19*** | ***20*** |
| Comparative example 4 | ***41179*** | ***22*** | ***25*** |

As can be seen in connection with Tables 4 and 5, the comparative bolts in Comparative examples 1-4 are all significantly inferior in performance to the bolts in Examples 1-10. In the present invention, the steels for bolts in Examples 1-10 all have good performance, with a tensile strength of 1200 MPa or more, a yield-to-tensile ratio of more than 0.9, a tensile strength loss≤10% in hydrogen charging and slow straining test, a bolt tightening and twisting fluctuation of 8% or less, and a bolt fatigue life of more than 75000 times.

The steel for bolts according to the present invention can be used to manufacture a homogeneous high-strength durable bolt, and the manufactured homogeneous high-strength durable bolt can be effectively applied to application scenarios with high requirements on the tightening force, such as automobile engines, high-end precision machinery, and the like, which can significantly improve the efficiency of the engines and the machining precision of the machinery, and thus has broad market application prospects and very good economic and social benefits.

In addition, the combinations of technical features in the present invention are not limited to the combinations in the claims or the specific embodiments of the present invention, and all technical features in the present invention can be freely combined or integrated in any way unless there is a contradiction therebetween.

It should be noted that the embodiments listed above are only specific embodiments of the present invention. Obviously, the present invention is not limited to the above embodiments, and similar variations or modifications made therewith can be directly obtained or easily associated by those skilled in the art from the contents disclosed by the present invention, and all fall within the protection scope of the present invention.

## Claims

1. A steel for bolts, comprising the following chemical elements in percentage by mass in addition to Fe and inevitable impurities:
C: 0.37-0.45%;
Si: 0.01-0.08%;
Mn: 0.45-0.80%;
Cr: 0.90-1.30%;
Mo:0.20-0.45%;
Ni:0.10-0.30%;
V: 0.15-0.30%; and
Al: 0.015-0.035%.

2. The steel for bolts according to claim 1, wherein the steel for bolts consists of the following chemical elements in percentage by mass:
C: 0.37-0.45%;
Si: 0.01-0.08%;
Mn: 0.45-0.80%;
Cr: 0.90-1.30%;
Mo:0.20-0.45%;
Ni:0.10-0.30%;
V: 0.15-0.30%;
Al: 0.015-0.035%, and;
the balance of Fe and inevitable impurities.

3. The steel for bolts according to claim 2, wherein the contents of impurity elements satisfy the following in percentage by mass: Cu<0.05%; P<0.01%; S≤0.010%; O≤0.001%; and N≤0.005%.

4. The steel for bolts according to claim 3, wherein a ratio between the contents of the element Al and element O in percentage by mass satisfies the following: Al/O>20.

5. The steel for bolts according to claim 3, wherein the contents of the element V, element C and element N in percentage by mass satisfy the following: V×(C+N)≤1/8.

6. The steel for bolts according to claim 1 or 2, wherein the steel for bolts has a microstructure comprising tempered sorbite.

7. The steel for bolts according to claim 6, wherein the microstructure further has carbonitride precipitates of V, wherein a number proportion of carbonitride precipitates of V having a size of 5-50 nm is higher than 90%.

8. The steel for bolts according to claim 1 or 2, wherein inclusions in the steel for bolts have a size of less than 38 µm.

9. The steel for bolts according to claim 1 or 2, wherein the steel for bolts satisfies the following properties: a tensile strength≥1200 MPa, a yield-to-tensile ratio>0.9, a tensile strength loss≤10% in hydrogen charging and slow straining test, a bolt tightening and twisting fluctuation<8%, and a bolt fatigue life>75000 times.

10. A manufacturing method for the steel for bolts according to any one of claims 1-9, comprising the steps of:
(1) smelting molten steel;
(2) casting the smelted molten steel to produce a billet;
(3) performing rough rolling on the billet;
(4) performing high-speed wire rolling to produce a coil rod;
(5) performing Stelmor controlled cooling on the coil rod; and
(6) heat treatment, comprising sequentially subjecting the coil rod to spheroidizing heat treatment, drawing, and quenching and tempering heat treatment, wherein the holding temperature of the spheroidizing heat treatment is 760-790°C and the holding time is 4-12 h, followed by a slow cooling process after the holding with a cooling speed of lower than 40°C/h; wherein a drawing area reduction rate of the coil rod is controlled to 5-30% during the drawing; wherein a heating temperature of the quenching and tempering heat treatment is 850-950°C and a tempering temperature is 500-600°C.

11. The manufacturing method according to claim 10, wherein in step (1), a vacuum degassing time is controlled to be more than 15 min during the smelting.

12. The manufacturing method according to claim 10, wherein in step (2), carbon segregation at a core of the billet is controlled to be lower than 1.10 during the casting.

13. The manufacturing method according to claim 10, wherein in step (3), the rough rolling comprises heating the billet after blooming, wherein a heating temperature during the billet heating process is controlled to be 960-1150°C, and a holding time is controlled to be 1.5-3.0 h.

14. The manufacturing method according to claim 10, wherein in step (4), a rolling speed is controlled to be 8-90 m/s.

15. The manufacturing method according to claim 14, wherein in step (4), an inlet temperature of a finishing rolling unit is controlled to 850-970°C, an inlet temperature of a reducing and sizing unit is controlled to be 800-950°C, and a laying temperature is controlled to be 750-900°C.

16. The manufacturing method according to claim 10, wherein in step (5), the Stelmor controlled cooling uses at least 14 fans, wherein an air volume of fans F1-F5 is less than or equal to 80%, an air volume of fans F6-F12 is less than or equal to 50%, and an air volume of fans F13-F14 is less than or equal to 45%.
